# DEMANDE DE BREVET EUROPEEN

(11) **EP 1 614 626 A1**
(43) Date de publication de la demande: **11.01.2006**
(21) Numéro de dépôt: 05106267.7
(22) Date de dépôt: 08.07.2005
(51) Int. Cl.: B64C 13/24, F42B 10/64

(54) **Dispositif de gouverne aérodynamique à moteur deporté pour un missile**

(30) Priorité: 09.07.2004 FR 0451488
(71) Demandeur: MBDA France, 75016 Paris (FR)
(72) Inventeur: Bois, Georges, 91430, Vauhallan (FR); Rossi, Rinaldo, 75116, Paris (FR)
(74) Mandataire: Poulin, Gérard

(57) **Abrégé**

Un aéronef comprenant au moins une gouverne aérodynamique (26) qui est commandée par un moteur (4) déporté, par l'intermédiaire d'une transmission comprenant un organe linéaire (7) rigide en torsion mais souple en flexion et en traction et compression, pour absorber des déformations thermomécaniques. Cette transmission comporte peu de jeu, une grande souplesse, ne nécessite aucun autre support et s'accommode favorablement d'un réducteur (9) placé près de la gouverne (26) plutôt que du moteur (4).

## Description

Le sujet de cette invention est un dispositif de gouverne aérodynamique à moteur déporté pour un missile.

Certains aéronefs et notamment des missiles comprennent des gouvernes commandées par des moteurs pour infléchir le vol. Dans l'état de l'art connu, l'accouplement du moteur électrique ou autre à la gouverne se fait par l'intermédiaire d'un réducteur et/ou un élément de transmission pouvant comprendre des bielles, des leviers ou d'autres éléments, ou encore des dispositifs de transformation du mouvement rotatif en mouvement linéaire. L'ensemble est encombrant : la place au voisinage de la gouverne est parfois insuffisante pour le loger. Le moteur doit alors être déporté à un emplacement distant, par exemple dans un carénage plus ou moins proche. Dans d'autres cas, les conditions thermomécaniques ne permettent pas non plus de placer le moteur près de la gouverne, et un tel carénage sert alors de protection thermique. La transmission doit alors être modifiée et allongée.

Les réalisations classiques mettent alors en oeuvre des associations de bielles et de leviers dont les performances risquent d'être insuffisantes : ces réalisations sont complexes, lourdes, et surtout transmettent des efforts importants à la structure de l'aéronef, dans des agencements plus ou moins hyperstatiques pouvant solliciter les pièces à la flexion. Cela est incompatible avec les déformations thermomécaniques de la structure en vol, dans le cas de missiles qui sont soumis à des échauffements beaucoup plus importants que d'autres aéronefs. De plus, pour que le système fonctionne correctement en pratique, il est nécessaire d'introduire une souplesse des pièces et des jeux fonctionnels nuisant à la précision de la commande et qui favorisent l'apparition de vibrations.

Une autre difficulté spécifique aux missiles et à leurs grandes accélérations réside dans les vibrations que les gouvernes subissent. Dans certaines circonstances, notamment quand des modes de flexion et de torsion sont couplés, des résonances apparaissent qui peuvent détruire les gouvernes. L'invention permet de remédier au moins partiellement à ce risque, en rendant le montage des gouvernes plus rigides grâce à un agencement particulier de la transmission.

Une solution à ces difficultés est proposée avec l'invention. Le nouveau dispositif comprend, outre le moteur et la gouverne aérodynamique, une transmission s'étendant entre eux pour communiquer à la gouverne un mouvement corrélé au mouvement de rotation du moteur ; il est original en ce que la transmission comprend principalement un organe linéaire rigide en torsion, mais souple en traction, compression et flexion ; un réducteur de vitesse placé entre l'organe linéaire et la gouverne et au moins un élément de liaison glissante limite l'organe linéaire.

L'art antérieur comporte des transmissions souples en flexion et rigides en torsion, généralement dans des avions, pour transmettre des mouvements de rotation d'un moteur à une gouverne ou une série de gouvernes éloignées ; mais la souplesse en traction et compression, nécessaire pour absorber les dilatations thermiques subies par les missiles, leur manque.

En plaçant le réducteur près de la gouverne, alors qu'il est généralement adjacent au moteur dans les agencements connus, les vibrations ne sont pas transmises à l'organe linéaire et un montage plus stable de la gouverne est obtenu, ce qui réduit fortement le niveau que les vibrations atteindraient si elles se propageaient le long de la transmission vers le moteur : le réducteur fait office de filtre mécanique.

Un avantage de cette transmission est qu'elle n'a pas besoin d'être soutenue par la structure voisine de l'aéronef, ne lui communique que très peu d'efforts et n'est pas influencée par les déformations de l'aéronef. Une construction parfaitement isostatique et de petite dimension devient possible pour la transmission.

La transmission peut aussi comprendre un vérin à conversion de mouvement de rotation en mouvement de translation, comprenant une portion soumise au mouvement de translation et articulée à un levier de commande de la gouverne et une portion soumise au mouvement de rotation et accouplée à l'organe linéaire. Cette conception permet de bénéficier des constructions classiques de la gouverne, où le mouvement de rotation est commandé en pesant sur le levier.

L'organe linéaire peut comprendre des tronçons d'arbres assemblés entre eux par des cardans, par exemple trois tronçons et deux cardans ; il peut aussi comprendre un arbre souple ou tout autre moyen équivalent venant à l'esprit de l'homme du métier. Avec ces deux réalisations particulières, une souplesse en flexion satisfaisante de l'organe linéaire est obtenue.

Les éléments de liaison à accouplement glissant peuvent comprendre chacun un axe et une douille cannelés, qui autorisent des déformations du dispositif sans exercer d'effort sur l'organe linéaire, dont les extrémités glissent simplement sur les éléments de liaison.

La transmission peut encore comprendre d'autres pièces, comme des renvois d'angle. Un renvoi d'angle peut notamment être agencé au sein du réducteur précédent dans le cas où un vérin à conversion de mouvement est employé : le levier de commande de la gouverne peut alors être placé ailleurs que dans l'alignement de l'organe linéaire, ce qui offre un choix beaucoup plus grand pour aménager le dispositif.

Le moteur peut être un moteur électrique sans balais.

L'invention sera maintenant décrite et mieux comprise sous ses différents aspects au moyen des figures suivantes :
- la figure 1 est une vue générale du dispositif,
- et les figures 2 et 3 illustrent l'agencement du dispositif dans un missile.

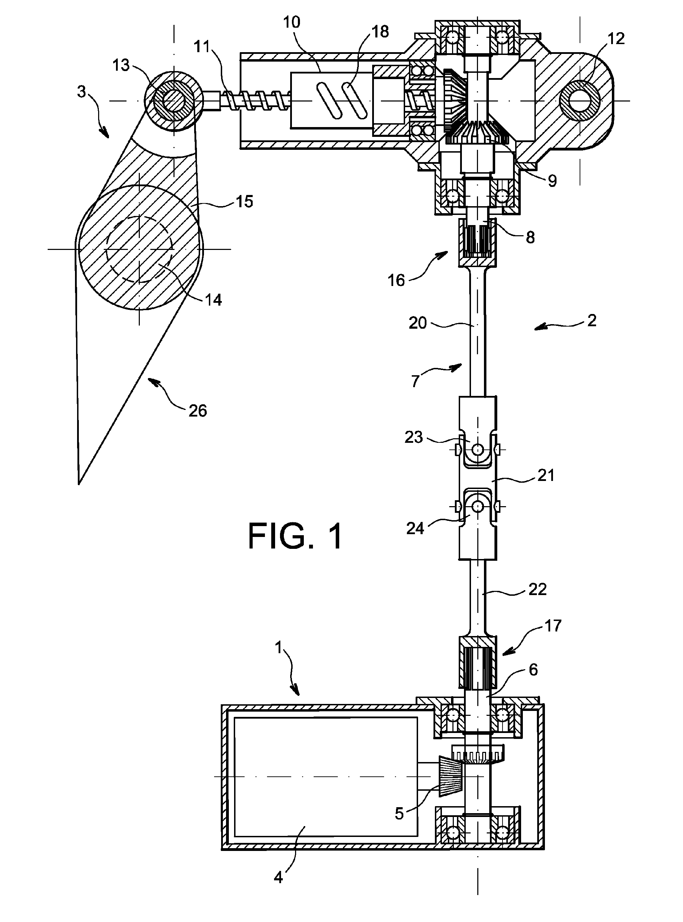

La figure 1 représente le dispositif de l'invention. Un premier module 1 moteur est constitué d'un moteur électrique sans balais 4 à la sortie duquel se trouve un premier réducteur de vitesse 5 à renvoi d'angle et un arbre de sortie 6.

Un deuxième module 2 de transmission est constitué d'un organe linéaire 7, d'un réducteur à renvoi d'angle 9 et d'un vérin linéaire 10. Les extrémités de l'organe linéaire 7 sont reliées à l'arbre de sortie 6 et à un arbre d'entrée 8 du réducteur à renvoi d'angle 9 par des accouplements 16 et 17 à axe et douille cannelés placés concentriquement de manière à pouvoir glisser l'un dans l'autre tout en maintenant une transmission parfaite du mouvement de rotation.

Le vérin linéaire 10 comprend une vis à billes 11 ou à rouleaux immobile en rotation et qui se déplace dans un écrou 18 associé à une roue dentée du réducteur à renvoi d'angle 9.

Le dispositif comprend encore un troisième module 3 récepteur comprenant une gouverne 26, un arbre de rotation 14 de la gouverne 26 et un levier 15 d'entraînement de ladite gouverne 26. Le levier 15 et la vis 11 sont assemblés par une articulation 13, et le réducteur 9 est assemblé de façon tournante à un point fixe de l'aéronef par une autre articulation 12. L'organe linéaire 7 est composé de tronçons 20, 21 et 22 successifs et joints par deux cardans 23 et 24. Il pourrait aussi être formé d'un arbre unique flexible s'étendant entre les mêmes extrémités et apte à se courber et à se redresser selon les déformations qui sont infligées.

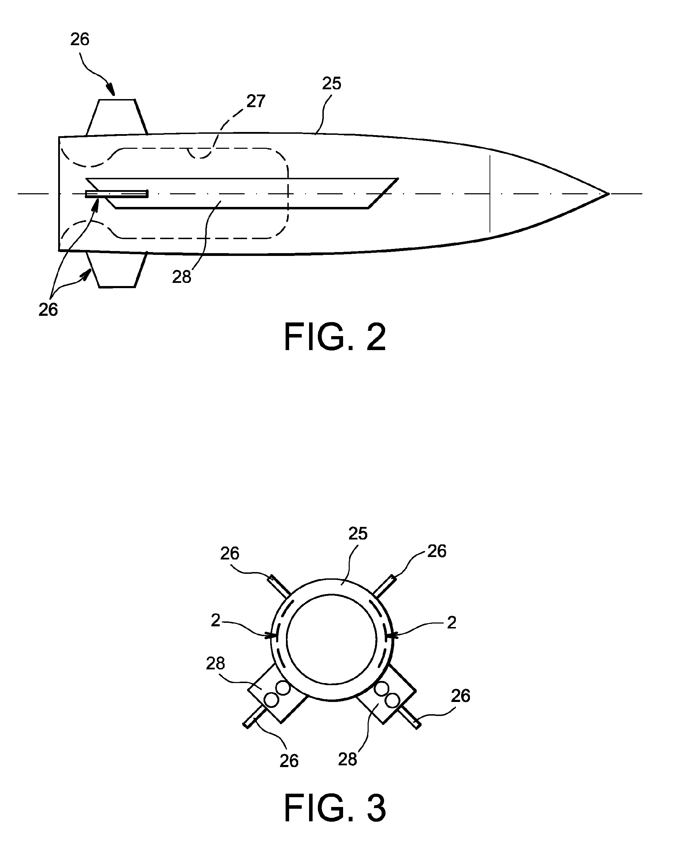

Les figures 2 et 3 représentent un missile équipé d'un fuselage 25 et de quatre gouvernes 26 à l'arrière, saillant radialement vers l'extérieur. Un statoréacteur 27 occupe la plus grande partie de la section du fuselage 25 au niveau des gouvernes 26 et plus vers l'avant. Le missile comprend encore deux carénages 28 extérieurs servant d'entrées d'air et placés derrière deux des gouvernes 26.

Les quatre moteurs 4 commandant les gouvernes 26 sont placés par paires dans les deux carénages d'entrée d'air 28. Ceux qui commandent les gouvernes 26 placées devant les entrées d'air 28 le font par une transmission courte ordinaire. Les autres gouvernes 26 sont commandées d'après l'invention ; les organes linéaires 7 s'étendent dans une portion de l'espace annulaire, voisine d'un quart de tour, entre le fuselage 25 et le statoréacteur 27. Les cardans 23 et 24 permettent de courber l'organe linéaire 7 de manière qu'il reste vers le centre de l'espace annulaire, sans aucun support avec le fuselage 25 ni la paroi du statoréacteur 27. Ils s'adaptent facilement aux déplacements que les déformations thermomécaniques produisent entre le moteur 4 et les gouvernes 26, par une modification des angles des cardans 23 et 24 et par le glissement des accouplements 16 et 17 qui ajuste le module de transmission 2 à la distance changeante entre le module moteur 1 et le module récepteur 3.

## Revendications

1. Dispositif de gouverne aérodynamique de missile comprenant encore un élément moteur (1) animé d'un mouvement de rotation et un élément de transmission (2) s'étendant entre le moteur et la gouverne (26) pour communiquer à la gouverne un mouvement corrélé au mouvement de rotation du moteur, dispositif **caractérisé en ce que** l'élément de transmission comprend un organe linéaire (7) rigide en torsion, mais souple en traction, compression et flexion, **en ce qu'**il comprend un réducteur de vitesse (9) placé entre l'organe linéaire et la gouverne, et **en ce que** l'organe linéaire est limité par au moins un élément de liaison glissante.

2. Dispositif de gouverne aérodynamique de missile selon la revendication 1, **caractérisé en ce que** l'élément de transmission comprend un vérin (10) à conversion de mouvement de rotation en mouvement de translation, comprenant une portion (11) soumise au mouvement de translation et articulée à un levier (15) de commande de la gouverne (26), et une portion (18) soumise au mouvement de rotation et accouplée à l'organe linéaire.

3. Dispositif de gouverne aérodynamique de missile selon l'une quelconque des revendications 1 ou 2, **caractérisé en ce que** l'organe linéaire comprend des tronçons d'arbre (20, 21, 22) assemblés entre eux par des cardans (23, 24).

4. Dispositif de gouverne aérodynamique de missile selon l'une quelconque des revendications 1 ou 2, **caractérisé en ce que** l'organe linéaire comprend un arbre souple.

5. Dispositif de gouverne aérodynamique de missile selon l'une quelconque des revendications 1 à 4, **caractérisé en ce que** l'élément de liaison glissante est un accouplement à axe et à douille cannelés (16, 17).

6. Dispositif de gouverne aérodynamique de missile selon l'une quelconque des revendications 1 à 5, **caractérisé en ce que** le réducteur comprend une vis à billes (11) et un écrou (18) associés.

7. Dispositif de gouverne aérodynamique selon les revendications 2 à 6, **caractérisé en ce que** le réducteur est un réducteur à renvoi d'angle placé entre le vérin (10) et l'organe linéaire (7).

8. Dispositif de gouverne aérodynamique selon l'une quelconque des revendications précédentes, **caractérisé en ce que** le moteur est un moteur électrique sans balais.
